# EUROPEAN PATENT APPLICATION

(11) **EP 4 793 879 A1**
(43) Date of publication of application: **19.08.2026**
(21) Application number: 25305192.4
(22) Date of filing: 12.02.2025
(51) Int. Cl.: G06T 5/40, G06T 5/50

(54) **VIDEO FIELD TRACKER AND EQUALIZER**

(71) Applicant: InterDigital CE Patent Holdings, SAS, 75017 Paris (FR)
(72) Inventor: TOUZE, David, 35200 RENNES (FR); CAUVIN, Laurent, 35250 CHEVAIGNE (FR); MORVAN, Patrick, 35890 LAILLE (FR)
(74) Representative: Interdigital

(57) **Abstract**

A method comprising:
obtaining (40) at least two video sequences;
determining (41) a first reference level value for each video sequence, each first reference level value being representative of a luminance level of a same area of interest in each video sequence;
obtaining (43) a second reference level value; and,
modifying (44) at least one of the video sequences so that, for each modified video sequence, the luminance level of the same area of interest in the video sequence is equal to the second reference level value using a conversion curve depending on the first reference level value of the video sequence and on the second reference level value.

## Description

### 1. TECHNICAL FIELD

At least one of the present embodiments generally relates to the field of video production especially in live contents and more particularly to a method, a device and an equipment implementing a process of homogenization of a luminance level of a same area of interest in different viewpoints of a same scene.

### 2. BACKGROUND

Most of the time, live sports productions are realized with multiple cameras focusing of a same scene. In addition, sports are played on a field that represents a large part of the scene (green grass for football, baseball, soccer, Wimbledon tennis..., clay for Roland-Garros tennis, blue field for Flushing Meadows tennis, etc). This large part should be consistent from one camera to another one. In other words, the luminance level of this part should be similar from one camera to another camera. In the following we call this large part *area of interest* and the luminance level corresponding to the area of interest *Reference level.*

There could be many different reference levels, depending on a context of the scene: does the scene represents sports, drama, interview, ...?

For instance, in section 2.2 *"*Signal levels for line-up in production" of document Report ITU-R BT.2408-7, Guidance for operational practices in HDR television production, 09/2023*,* just called *BT.2408-7* in the following, different examples of reference levels for HDR (High Dynamic Range) content are provided, such as: a Grey card 18% luminance level, set at "26" nits (both PQ and HLG) (see Table 1 of BT.2408-7), different skin tones with different ranges (see Table 2 of BT.2408-7), grass level in a sport production (see Table 2 of BT.2408-7), with a value between "30" and "65" nits.

Ideally and theoretically, all the cameras should be set-up and tuned in a consistent manner, i.e. all HDR (High Dynamic Range) or SDR (Standard Dynamic Range) cameras should generate identical images with identical reference luminance and color levels. In reality, this is not always the case and sometimes, as the cameras are not set-up identically, one can see a difference between the luminance level of the area of interest when switching the produced video from one camera to another camera. This can be annoying and therefore this needs to be solved.

It is desirable to overcome the above drawbacks.

It is particularly desirable to homogenize the luminance levels of a same area of interest in different viewpoints of a same scene.

### 3. BRIEF SUMMARY

In a first aspect, one or more of the present embodiments provide a method comprising:
obtaining at least two video sequences;
determining a first reference level value for each video sequence, each first reference level value being representative of a luminance level of a same area of interest in each video sequence;
obtaining a second reference level value; and,
modifying at least one of the video sequences so that, for each modified video sequence, the luminance level of the same area of interest in the video sequence is equal to the second reference level value using a conversion curve depending on the first reference level value of the video sequence and on the second reference level value.

In an embodiment, determining a first reference level value for each video sequence comprises for a video sequence:
computing a first histogram representative of a luminance component of the video sequence; and,
determining the first reference level value of the video sequence from a second histogram representative of the first histogram based on a bin value corresponding to a most represented luminance value in the video sequence.

In an embodiment, the second histogram is a filtered version of the first histogram wherein, for each current bin of the second histogram, an histogram value corresponding to the current bin is a weighted average of a plurality of histogram values of the first histogram corresponding to the current bin and to bins in a neighborhood of the current bin.

In an embodiment, determining a first reference level value for each video sequence comprises for a video sequence applying a temporal smoothing to a plurality of reference levels obtained from the second histogram.

In an embodiment, responsive to a first value is greater than zero, the first value depending on the first reference level value and on a ratio between the second reference level value and the first reference level value, obtaining a conversion curve passing through a reference level point up to the first reference level value using a curve based on a gamma curve, the reference level point having an abscissa equal to the first reference level value and an ordinate equal to the second reference level value.

In an embodiment, responsive to the reference level point is above a no-correction curve, the no-correction curve being such that an application of the no-correction curve to a video sequence doesn't modify said video sequence, obtaining a conversion curve passing through the reference level point for values greater than the first reference level value using a mathematical operation generating a second tone mapping curve starting at the reference level point and joining progressively the no-correction curve at a convergence value, the convergence value specifying an abscissa between the first reference level value and a maximum abscissa value.

In an embodiment, responsive to the reference level point is below a no-correction curve, the no-correction curve being such that an application of the no-correction curve to a video sequence doesn't modify said video sequence, obtaining a conversion curve passing through the reference level point for values greater than the first reference level value based on the first reference level value and on a convergence value, the convergence value specifying an abscissa at which the conversion curve joins the no-correction curve between the first reference level value and a maximum abscissa value.

In an embodiment, responsive to the convergence value is lower than the maximum abscissa value, the method comprises defining the conversion curve as a copy of the no-correction curve between the convergence value and the maximum abscissa value.

In a second aspect, one or more of the present embodiments provide a device comprising electronic circuitry configured for:
obtaining at least two video sequences;
determining a first reference level value for each video sequence, each first reference level value being representative of a luminance level of a same area of interest in each video sequence;
obtaining a second reference level value; and,
modifying at least one of the video sequences so that, for each modified video sequence, the luminance level of the same area of interest in the video sequence is equal to the second reference level value using a conversion curve depending on the first reference level value of the video sequence and on the second reference level value.

In an embodiment, determining a first reference level value for each video sequence comprises for a video sequence:
computing a first histogram representative of a luminance component of the video sequence; and,
determining the first reference level value of the video sequence from a second histogram representative of the first histogram based on a bin value corresponding to a most represented luminance value in the video sequence.

In an embodiment, the second histogram is a filtered version of the first histogram wherein, for each current bin of the second histogram, an histogram value corresponding to the current bin is a weighted average of a plurality of histogram values of the first histogram corresponding to the current bin and to bins in a neighborhood of the current bin.

In an embodiment, determining a first reference level value for each video sequence comprises for a video sequence applying a temporal smoothing to a plurality of reference levels obtained from the second histogram.

In an embodiment,, responsive to a first value is greater than zero, the first value depending on the first reference level value and on a ratio between the second reference level value and the first reference level value, the electronic circuitry is further configured for obtaining a conversion curve passing through a reference level point up to the first reference level value using a curve based on a gamma curve, the reference level point having an abscissa equal to the first reference level value and an ordinate equal to the second reference level value.

In an embodiment, responsive to the reference level point is above a no-correction curve, the no-correction curve being such that an application of the no-correction curve to a video sequence doesn't modify said video sequence, the electronic circuitry is further configured for obtaining a conversion curve passing through the reference level point for values greater than the first reference level value using a mathematical operation generating a second tone mapping curve starting at the reference level point and joining progressively the no-correction curve at a convergence value, the convergence value specifying an abscissa between the first reference level value and a maximum abscissa value.

In an embodiment, responsive to the reference level point is below a no-correction curve, the no-correction curve being such that an application of the no-correction curve to a video sequence doesn't modify said video sequence, the electronic circuitry is further configured for obtaining (44107) a conversion curve passing through the reference level point for values greater than the first reference level value based on the first reference level value and on a convergence value, the convergence value specifying an abscissa at which the conversion curve joins the no-correction curve between the first reference level value and a maximum abscissa value.

In a third aspect, one or more of the present embodiments provide a non-transitory information storage medium storing program code instructions for implementing the method according to the first aspect.

In a fourth aspect, one or more of the present embodiments provide a computer program comprising program code instructions for implementing the method according to the first aspect.

### 4. BRIEF SUMMARY OF THE DRAWINGS

FIG. 1 illustrates luminance histograms of "3" images, each image being extracted from one video sequence of three video sequences, each video sequence representing a different viewpoint on a same scene;
FIG. 2 illustrates schematically an example of context in which the various embodiments are implemented;
FIG. 3 illustrates an example of live production system in which embodiments of the present disclosure can be implemented;
FIG. 4 illustrates a process for homogenizing the reference levels of successive video sequences offering different viewpoints on a scene;
FIG. 5 illustrates a process of modifying a video sequence;
FIG. 6A illustrates a process for estimating a first reference level of a video sequence;
FIG. 6B illustrates a process of determining a reference level curve;
FIG. 7 illustrates a no-correction curve;
FIG. 8 illustrates two reference level curves resulting from a modification of a no-correction curve;
FIG. 9A and 9B illustrate a use of a convergence point;
FIG. 10 illustrates a non-filtered histogram (top) and a filtered histogram (bottom);
FIGS. 11A and 11B illustrate examples of curves obtained applying a step of the process of FIG. 6B;
FIG. 12 illustrates a RL curve with a non-monotonic increasing part;
FIG. 13 illustrates a monotonic increasing RL curve;
FIGS. 14A and 14B illustrate monotonic increasing reference level curves;
FIG. 15 illustrates the algorithm applied for defining a reference level curve in case of unrealistic or extreme reference levels;
FIG. 16 illustrates a part of monotonic increasing RL curve;
FIGS. 17A and 17B illustrate two examples of a part of monotonic increasing RL curve;
Fig. 18 illustrates an algorithm to identify lobes in an histogram;
FIG. 19A, 19B and 19C illustrate applications of the process of FIG. 4.

### 5. DETAILED DESCRIPTION

As already evocated before, due to cameras unalignment on a multiple cameras production set, the luminance level of a same large area of interest in a scene may be different when switching from one camera to another. As an example, let's take an example of a real football game shot in the afternoon on a sunny day. Let's take the example of "3" successive video sequences in HDR-HLG (see document Recommendation ITU-R BT.2100-2, Image parameter values for high dynamic range television for use in production and international programme exchange, 07/2018*),* each video sequence being taken by a different camera. The luminance level of the grass should be consistent from one camera to another, and this is not the case.

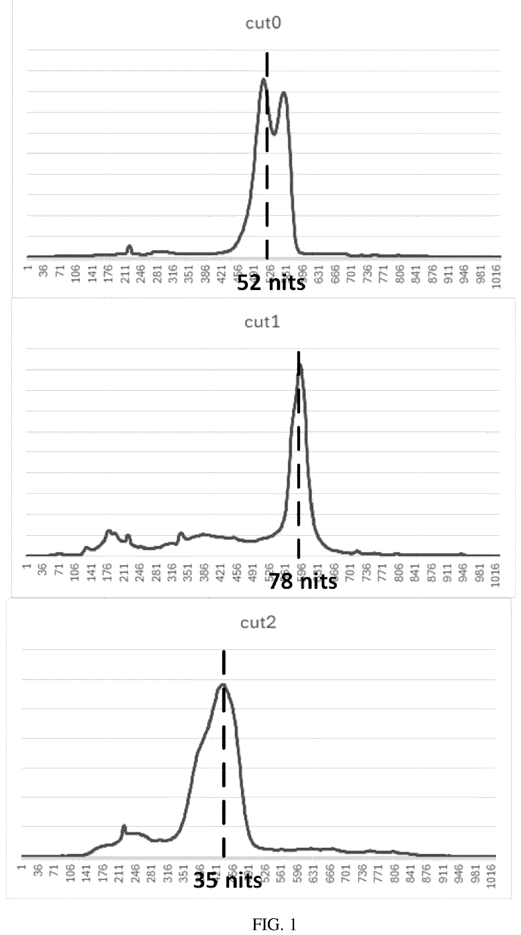

FIG. 1 illustrates luminance histograms of "3" images, each image being extracted from one video sequence of three video sequences, each video sequence representing a different viewpoint on a same scene.

In each histogram, the peak of luminance values represents correspond to the largest object, surround of the scene, i.e. the green grass of the field. Here the largest object is considered as the object of interest.

The approximated reference level is different for the 3 video sequences: "52" nits for cut 0, "78" nits for cut 1 and "35" nits for cut 2. This inconsistency is visible and could be annoying.

Various embodiments described below try to solve the inconsistency described previously by modifying the luminance of each of the three video sequences, so that the consecutive video sequences have similar histogram peaks, i.e. similar reference level, leading to visually consistent luminance for consecutive video sequences.

Let's describe how to deal with the luminance in a video.

Generally, in video production and distribution, a video is encoded in a specific domain, using a transfer function, that is different for a HDR and a SDR content. For instance, in the HDR domain it can be PQ (see SMPTE ST 2084:2014: High Dynamic Range Electro-Optical Transfer Function of Mastering Reference Displays) or HLG (see Recommendation ITU-R BT.2100-2, Image parameter values for high dynamic range television for use in production and international programme exchange, 07/2018*).* In the SDR domain it can be BT.709 (see Recommendation ITU-R BT.709-6, Parameter values for the HDTV standards for production and international programme exchange, 06/2015) or BT.1886 (see document Recommendation ITU-R BT.1886 (03-2011): Reference electro-optical transfer function for flat panel displays used in HDTV studio production)(gamma 2.4)*.*

The conversion in a linear HDR or SDR domain is called Electro-Optical Transfer function (EOTF). The conversion in a non-linear HDR or SDR domain is called Opto-Electronic Transfer Functions (OETF or inverse EOTF).

The proposed embodiments are applicable to all these different domains, either SDR or HDR. It is also possible to change the domain before applying the invention, and then to return to an initial domain or to go to another domain.

Video use generally a YUV format, the Y component being the luminance component and the UV components being the chrominance components. This video is quantized with a specific bit depth, generally "8" or "10" or "12" bits.

It is generally encoded in Narrow Range format, with Y values in [64-940] range and UV in [64-960] range or in Full Range format, with YUV values in [0..1023].

In the following, for the sake of clarity, let's take an example of a YUV 10-bits Full Range video. The luminance Y is therefore encoded in the range [0..1023].

One can note that the proposed embodiments are not limited to YUV Full Range encoding. Indeed, any YUV Narrow Range video can be converted to Full Range video, by applying for instance a rescaling as follows: $Yfr = \left(Ynr-64\right) / 876 * 1023$

*Ynr* being the Y Narrow Range luminance value in [64..940] range and *Yfr* being the Y Full Range luminance value in [0..1023] range.

Moreover, a RGB video can be converted to YUV using an appropriate conversion matrices: BT.2020 matrix (see document Recommendation ITU-R BT.2100-2, Image parameter values for high dynamic range television for use in production and international programme exchange, 07/2018*)* for the HDR domain or BT.709 matrix (see document Recommendation ITU-R BT.709-6, Parameter values for the HDTV standards for production and international programme exchange, 06/2015*)* for the SDR domain.

In addition, the various embodiments are applicable to any encoding system that contains an element representative of the luminance or from which a representation of the luminance can be derived.

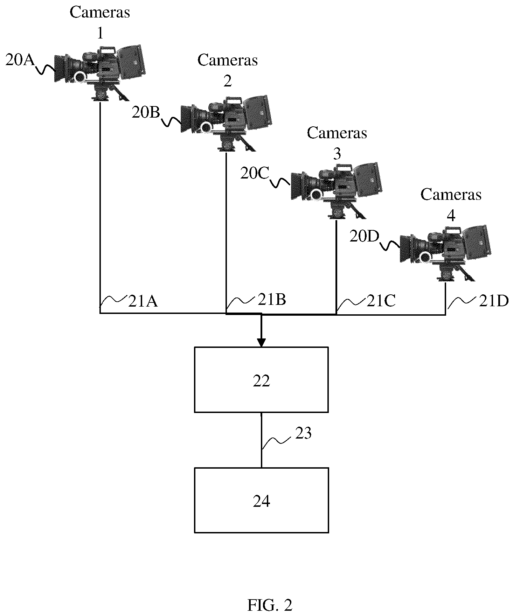

**FIG. 2** illustrates schematically an example of context in which the various embodiments are implemented.

In FIG. 2, cameras 20A, 20B, 20C and 20D are each acquiring video data representing a different viewpoint on a same live scene. Cameras 20A, 20B, 20C and 20D may all be HDR cameras, may all be SDR cameras or may be a combination of SDR and HDR cameras. Each camera transmits video data to a system 22 using communication channel 21A, 21B, 21C or 21D. The communication channel 21A, 21B, 21C or 21D is a wired (for example Internet or Ethernet) or a wireless (for example WiFi, 3G, 4G or 5G) network link.

The system 22 is for example a live production system controlled by an operator. Under the control of the operator that switches from a viewpoint to another, the live production system 22 generates a video stream composed of a succession of video sequences, each video sequence being extracted from the video data generated by one of the cameras 20A, 20B, 20C and 20D. The video stream represents therefore a succession of different viewpoints on the same live scene. When the set of cameras 20A, 20B, 20C and 20D is a combination of SDR and HDR cameras, the live production system 22 may need to convert SDR video data in HDR video data using an inverse tone mapper or respectively HDR video data in SDR video data using a tone mapper in order to combine video sequences in a same dynamic range.

The video stream is for example an encoded video stream generated using an AVC ((ISO/CEI 14496-10 / ITU-T H.264) encoder, an HEVC (ISO/IEC 23008-2 - MPEG-H Part 2, High Efficiency Video Coding / ITU-T H.265)) encoder, a VVC (ISO/IEC 23090-3 - MPEG-I, Versatile Video Coding/ ITU-T H.266) encoder or any other encoder based for example on AOM VP9, AV1, AV2.

The video stream is then transmitted to a display system 24 using a communication channel 23, that could be a wired or wireless network. The display system 24 then displays pictures corresponding to the video stream.

The display system 24 is for example comprised in a TV, a computer, a tablet, a smartphone, a head-mounted display, etc.

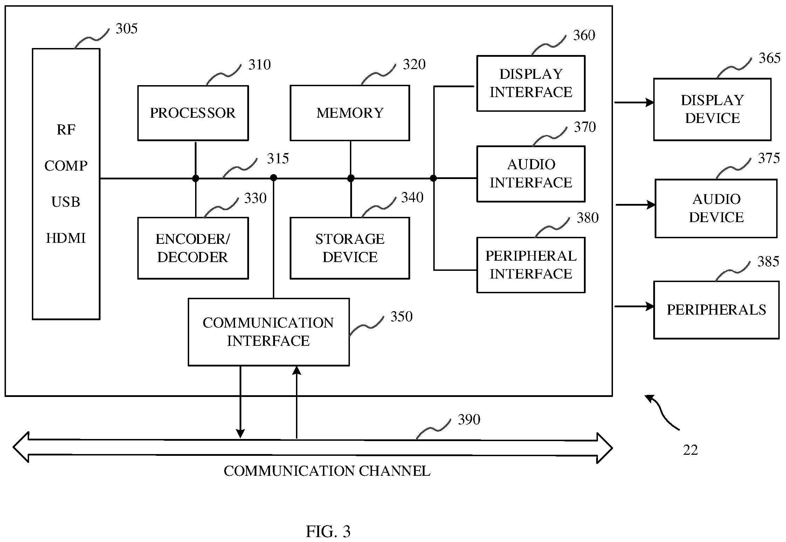

**FIG. 3** illustrates an example of live production system 22 in which embodiments of the present disclosure can be implemented.

The live production system 22 may be an electronic device including, for example, a personal computer, a laptop computer, a tablet computer and a server. One or more elements of the live production system 22, singly or in combination, may be implemented as an integrated circuit (IC), multiple ICs, and/or discrete components. For example, in one embodiment, the processing, encoding and/or decoding elements of the live production system 22 are distributed across multiple ICs and/or discrete components. In some embodiments, the live production system 22 is communicatively coupled to and/or in communication with other systems or devices, via, for example, a communications bus or dedicated input/output ports.

One or more of the elements of the live production system 22 may be provided within an integrated housing, with such elements being interconnected and able to transmit data therebetween using any suitable connection arrangement 315 generally known in the art, including, for example, an internal bus (e.g., I2C bus), wiring, and printed circuit boards.

The live production system 22 includes at least one processor 310 configured to execute instructions for implementing the embodiments described herein, including signal/data coding and processing. The processor 310 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 310 may include at least one central processing unit (CPU), embedded memory, input and output interfaces. All these types of processors are electronic circuitries.

The live production system 22 includes at least one memory 320, for example, a volatile memory device and/or a non-volatile memory device. The live production system 22 includes a storage device 340, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 340 may be or include, for example, an internal storage device, an attached storage device, and/or a network accessible storage device. Although shown separately, the memory 320 and the storage device 340 may be collocated, integrated together, or otherwise combined.

The live production system 22 includes an encoder/decoder module 330 configured to process raw video data/encoded video data and to provide encoded video data/decoded video data. For instance the encoder/decoder module 330 may receive encoded video data from the cameras, decode these encoded video data to obtain raw video data from which video sequences are extracted and once video data representing successive video sequences are created, encodes the so created video data to generate the video stream. The encoder/decoder module 330 may include one or more processors and/or memory (not shown). Although FIG. 3 depicts the encoder/decoder module 330 as a separate element of the live production system 22, in a variant the processor 310 and the encoder/decoder module 330 may be collocated and/or integrated together as a combination of hardware and/or software, e.g., in an electronic package, circuitry or chip. The encoder/decoder module 330 may be or include one or more modules that may be included in one or more separate devices that perform encoding and/or decoding functions.

Instructions for execution by the processor 310 and/or the encoder/decoder module 330 may be stored in the storage device 340 and subsequently loaded into memory 320 for execution by the processor 310. In some embodiments, one or more of processor 310, memory 320, storage device 340, and encoder/decoder module 330 may store one or more items when performing the processes disclosed herein. Such items may include input raw video data, reconstructed video data, decoded video data, sequences (i.e., portions) thereof, bitstreams, video streams, chunks, matrices, variables, operational logic, and intermediate and/or final results from processing of equations, formulas, or operations.

In some embodiments, the memory of the processor 310 and/or the encoder/decoder module 330 is used to store instructions and/or provide working memory for video encoding and decoding functions. In some embodiments, memory external to the processor 310 and/or the encoder/decoder module 330 (e.g., the memory 320 and/or the storage device 340) is used for one or more of these functions and/or, for example, to store an operating system of the live production system 22.

The live production system 22 may obtain or receive information via one or more input devices, interfaces, and/or ports as indicated in input block 305. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the live production system 22 to other devices via USB and/or HDMI ports or connections. Various forms of input processing may be implemented, for example, by and/or within a separate input processing device or the processor 310.

The live production system 22 includes a communication interface 350 that enables wired and/or wireless communication with other devices, e.g., via a communication channel 390 (corresponding to communication channel 21A, 21B, 21C, 21D or 23 in FIG. 2). The communication interface 350 may include one or more transceivers, modems, network cards and the like. The communication channel 390 may be or include wired and/or wireless mediums.

In some embodiments, data may be streamed to the live production system 22 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the live production system 22 via the communication interface 350 and communication channel 390.

The live production system 22 may provide one or more output signals to one or more output devices. The output devices may include a display device 365 (e.g., touchscreen display, monitor, etc.), an audio device 375 (e.g., speakers), and other peripheral devices 385, including, for example, a stand-alone DVR, a disk player, a stereo system, a lighting system, and other devices that provide a function based on an output of the live production system 22. The display device 365 can be for a television, tablet, laptop, head-mounted display, or other device. The output device may be used by the operator to decide when switching from a first viewpoint to a second viewpoint. In some embodiments, control signals are communicated between the live production system 22 and the display device 365, the audio device 375, and/or the peripheral devices 385, enabling device-to-device control with or without user intervention. The output devices may couple to and/or communicate with the live production system 22 via dedicated connections via respective display, audio, and peripheral interfaces 360, 370, 380. Alternatively, the output devices may couple to and/or communicate with the live production system 22 via the communication channel 390 and the communication interface 350.

The display device 365 and the audio device 375 may be collocated, integrated, or otherwise combined with the other components of live production system 22 in a single unit (e.g., a television). Alternatively, the display device 365 and the audio device 375 may be separate from one or more of the other components of the live production system 22. In embodiments in which the display device 365 and the audio device 375 are external components, the output signals may be provided via dedicated outputs and/or connections, including, for example, HDMI ports, USB ports, or COMP outputs.

A feature of the various embodiments is to modify the luminance value Y of the video sequences in order to obtain a same (or similar) reference level in successive video sequences.

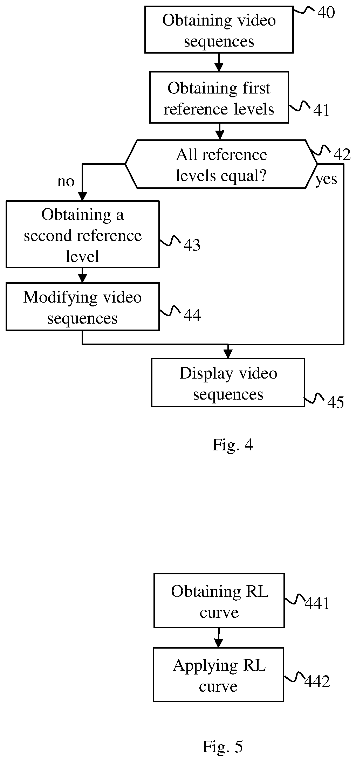

**FIG. 4** illustrates a process for homogenizing the reference levels of successive video sequences offering different viewpoints on a scene.

The process of FIG. 4 is for instance implemented by the processor 310 of the live production system 22.

In a step 40, the processor 310 obtains at least two video sequences each representing a different viewpoint of a same scene.

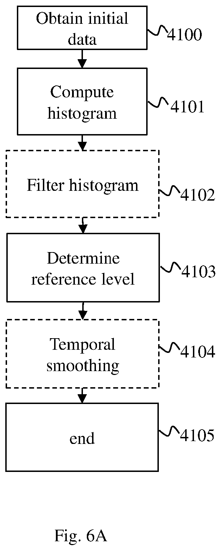

In a step 41, the processor 310 obtains first reference level values, one for each video sequence of the at least two video sequences. Each first reference level value is representative of a luminance level of a same area of interest in each video sequence. A process for determining a reference level value of a video sequence is detailed in relation to FIG. 6A below.

In a step 42, the processor 310 determines if all first reference level values are equal or at least similar. At least similar means that a difference between any couple of first reference level values is not larger than Δ, wherein Δ is equal for instance to "10" nits.

Responsive to the first reference level values are all equal or at least are similar, in a step 45, the processor 310 transmits the video sequences to the display system 24 without modifying them in an order defined by the operator so that they are displayed consecutively.

Responsive to the first reference level values are not similar, in a step 43, the processor 310 obtains a second reference level value. The second reference level value is for instance provided by the operator. The second reference level value may be equal to one of the first reference level values or different from the first reference level values.

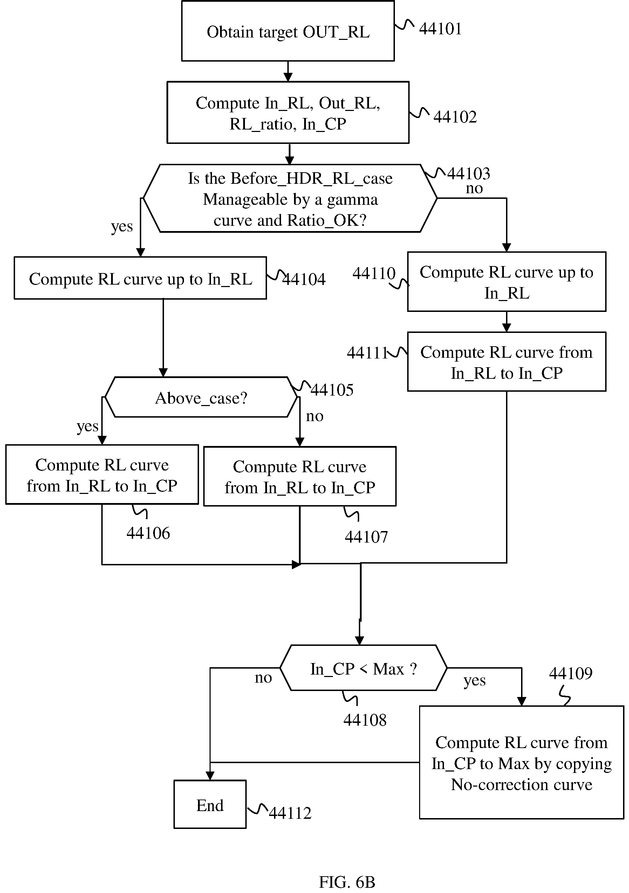

In a step 44, the processor 310 modifies at least one of the video sequences so that, for each modified video sequence, the luminance level of the same area of interest in the video sequence is equal to the second reference level value using a conversion curve depending on the first reference level value of the video sequence and on the second reference level value. In the following, the conversion curve is called reference level curve or RL curve. A process for determining a RL curve is detailed in relation to FIG. 6B below. Note that when the second reference level value is equal to one of the first reference level values, all video sequences except the one corresponding to the second reference level value are modified. Otherwise, all video sequences are modified.

Once the video sequences that don't have a first reference level value equal to the second reference level value have been modified, in step 45, the processor 310 transmits the video sequences to the display system 24 in an order defined by the operator so that they are displayed consecutively.

Note that in the embodiment of the process of FIG. 4, the modification of the video sequences concerns only the luminance components of these sequences. In other words, the RL curve is applied only on the luminance component. In a variant of the embodiment of FIG. 4, some modifications could also be applied to the chrominance components U and V, depending on the modifications of the luminance component.

In the process of FIG. 4, the condition in step 42 to use a second reference level is a condition based on the similarity or equality of the first reference levels. In another embodiment of step 42, the condition can just depend on a decision of the operator. For instance, the operator may decide to use a second reference level different from the first reference levels.

Let's define a look-up table (LUT) *Y_lut* for a 10 bits luminance component Y in Full Range with "1024" entries, each entry representing a possible value of the luminance component Y, from "0" to "1023". Each entry may be filled with an integer value in [0, 1023]. The initial values are filled with the value of the entry, i.e., entry "0" is filled with value "0", entry "1" is filled with value "1", ..., entry "1023" is filled with value "1023". With that *Y_lut,* the Y luminance values are not modified, i.e. Y_out = Y_in. Let's call a curve represent *Y_lut a No-correction curve.*

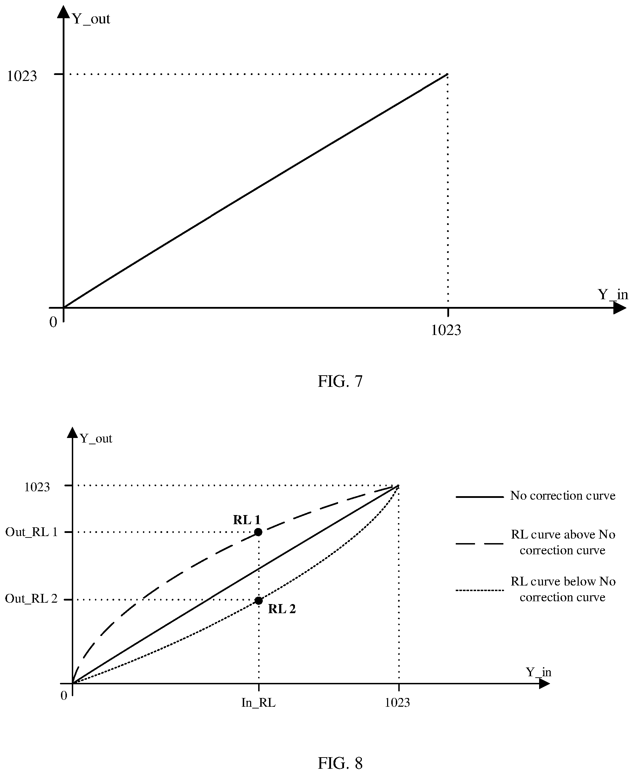

**FIG. 7** illustrates the no-correction curve.

Note that the LUT *Y_lut* is used here to simplify the description of the embodiments. In a real application, when no modification is applied to a video sequence, no LUT is applied to the video sequence.

In the following, we will show that the step 44 of modification at least one of the video sequences comprises, for each video sequence to modify, a modification of the no-correction curve so that a luminance value *Y_in* that characterizes the reference level of the video sequence is modified to a luminance value *Y_out* that characterizes a targeted reference level of a modified video sequence.

**FIG. 8** illustrates two RL curves resulting from a modification of a no-correction curve.

As can be seen in FIG. 8, two cases are possible: the Reference Level point (RL1) is above the No-correction curve, therefore the RL curve is above the No-correction curve. Let's call this case *Above_case;* the Reference Level point (RL2) is below the No-correction curve, therefore the RL curve is below the No-correction curve. Let's call this case *Below_case.*

In the following, we show in the following that these two cases are managed differently.

One can note that a RL curve may be split in two parts: a first part up to an abscissa *In_RL,* where the RL curve progressively moves away from the No-correction curve, starting from the origin ((0, 0) point) and up to the reference level point (In_RL, Out_RL). Let's call this case *Before_RL_case;* a second part after the abscissa *In_RL,* where the RL curve progressively gets closer to the No-correction curve, starting from the RL point (In_RL, Out_RL) and up to a last point *Max* (1023, 1023). Let's call this case *After_RL_case.*

In the following, we show in the following that these two cases *Before_RL_case* and *After_RL_case* are managed differently.

For the *After_RL_case,* if the abscissa *In_RL* is relatively close to the origin (0, 0), the second part of the curve should not join the No-correction curve at the last point Max (1023, 1023), to avoid a too much different curve that would produce a too much different content in the bright areas. Instead, a specific point called Convergence Point with an abscissa *In_CP* is defined. *In_CP* specifies an abscissa at which the second part of the RL curve joins the No-correction curve.

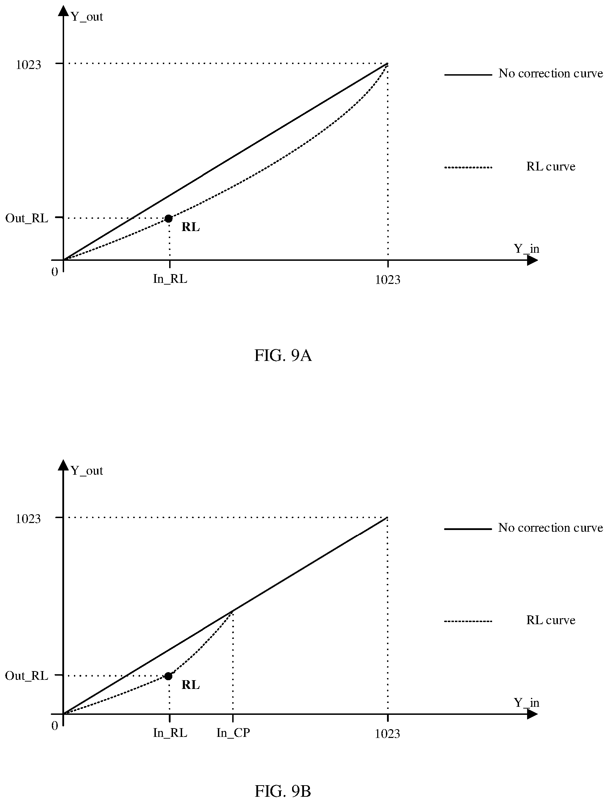

**FIG. 9A and 9B** illustrate a use of a convergence point in the *Below_case.*

The result of FIG. 9A without the convergence point is typically to avoid while the result of FIG. 9B with the convergence point is preferred.

**FIG. 6A** illustrates a process for estimating a first reference level of a video sequence.

The process of FIG. 6A is for instance executed by the processor 310 of the live production system 22 during step 41. The process of FIG. 6A is applied successively to each video sequence of the at least two video sequences obtained in step 40. In the following we describe an application to one video sequence, the same process being applied to all video sequences.

In a step 4100, the processor 310 obtains a value *Window_min_lum* and a value *Window_max_lum.* The values *Window_min_lum* and *Window_max_lum* represent respectively a minimum and a maximum luminance level between which the reference level is supposed to be found.

As an example, if we consider an HDR image with a "1000" nits Peak Luminance that represents a football game, the luminance level of the grass is supposed to be within an expected luminance range, for instance between "30" and "65" nits, as stated in Table 2 of BT.2408-7. A goal here is to look for a consistent value that depends on the scene and to avoid detecting a reference level that is irrelevant if the scene does not contain large areas of the expected surrounding (for instance, a zoom on the face of a football player without grass surrounding or a scene showing the sky or the attendance in the stadium).

Therefore, in that football game example, one can define a search window between *Window_min_lum =* 10 nits and *Window_max_lum =* 100 nits (a bit larger than the expected luminance range [30-65] nits.

The *Window_min_lum* and *Window_max_lum* are then converted in a video transfer function domain and sampled to a bit depth of the video ("1024" samples for "10" bits video). Two converted variables *histoY_min* and *histoY_max* are obtained as follows:
histoY_min = inv_EOTF(Window_min_lum)
histoY_max = inv_EOTF(Window_max_lum)

In a step 4101, the processor 310 computes an histogram, called *representing histogram,* representative of the luminance component Y of the video sequence. In an embodiment, the *representing histogram* is computed on an image of the video sequence. For instance, the image of the video sequence is the first image of the video sequence or the last image of the video sequence or any image that is representative of the content of the video sequence.

In a variant, an histogram is computed on a plurality of images of the video sequence, and the representing histogram is an average of the plurality of the computed histograms.

One can note that each image used for determining an histogram could be sup-sampled and the histogram could be computed on the sub-sampled image.

In an embodiment, the following algorithm is applied to compute an histogram on an image:

```
    for (int line = 0; line < height; line = line + sub_sampling_factor)
     {
       for (int col = 0; col < width; col = col + sub_sampling_factor)
       {
         const int idx = line × width + col;
         int cur_Y_val = Y[idx];
         histoY[cur_Y_val]= histoY[cur_Y_val]+1;
       }
     }
```

If sub_sampling_factor = 1, the histogram is computed on all the Y values of the image.

If sub_sampling_factor = 4, the histogram is computed on 1 / 16 of the Y values of the image.

In a step 4103, the processor 310 determines the luminance value corresponding to the highest bin of the representing histogram, i.e., the bin corresponding the luminance value the most represented in the image. The determined luminance value is then considered as the first reference level value IN_RL of the video sequence corresponding to the abscissa of the reference level point (In_RL, Out_RL).

In step 4105, the processor 310 ends the process of FIG. 6A.

Sometimes the histogram's shape can be noisy, making the detection of the highest bin unstable, especially between successive images in a video sequence.

In a variant of the process of FIG. 6A, an optional step 4102 of histogram filtering is introduced.

For instance, during the histogram filtering, each histogram bin can be computed as the sum (weighted or not) of some of the preceding bin and some of the subsequent bins. The following algorithm may be applied to compute a filtered histogram. This algorithm implements a non-weighted addition of the three preceding bins and the three subsequent bins to each current bin, leading to a filtered histogram *histoY_filt* :

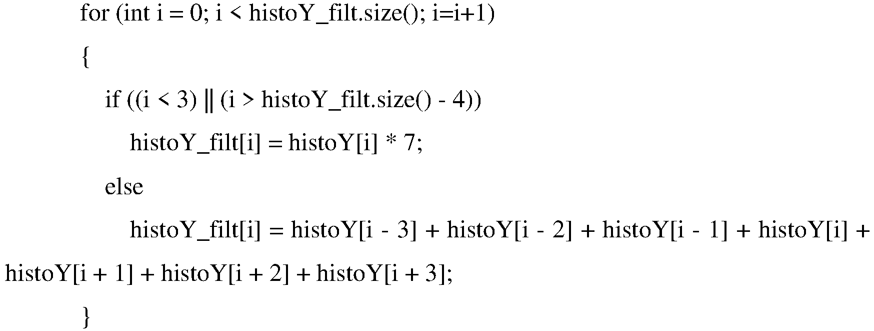

The filtered histogram *histoY_filt* is used as a representative histogram in step 4103.

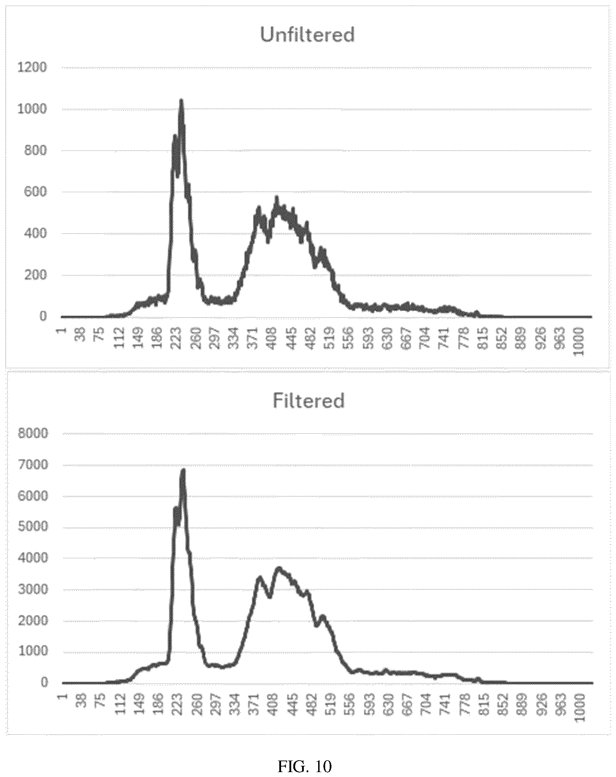

**FIG. 10** illustrates a non-filtered histogram (top) and a filtered histogram (bottom).

When dealing with video, within a video sequence, the luminance of the overall scene may change. This is the case for instance during a camera panning, if the sun is progressively shadowed by some clouds, etc.

Therefore, the first reference level value IN_RL may change within the video sequence. This may introduce some instability on the estimated first reference level value IN_RL. Therefore, an optional temporal management step 4104 is introduced between step 4103 and 4105.

Several methods could be applied during step 4104.

In a first embodiment of step 4104, the processor 310 applies a temporal smoothing of the first reference level value IN_RL within a video sequence. The temporal smoothing can be done for instance using an "alpha - (1 - alpha)" method described hereafter. The "alpha - (1 - alpha)" method relies on a value *filter_size* that allows to update a current value with a new value modulated by a defined weight that depends on the value *filter_size. filter_size =* 30 gives generally good results. The computation of a smoothed reference level value is for example given by the following algorithm applied to each (or a subset of the) image(s) of a video sequence:

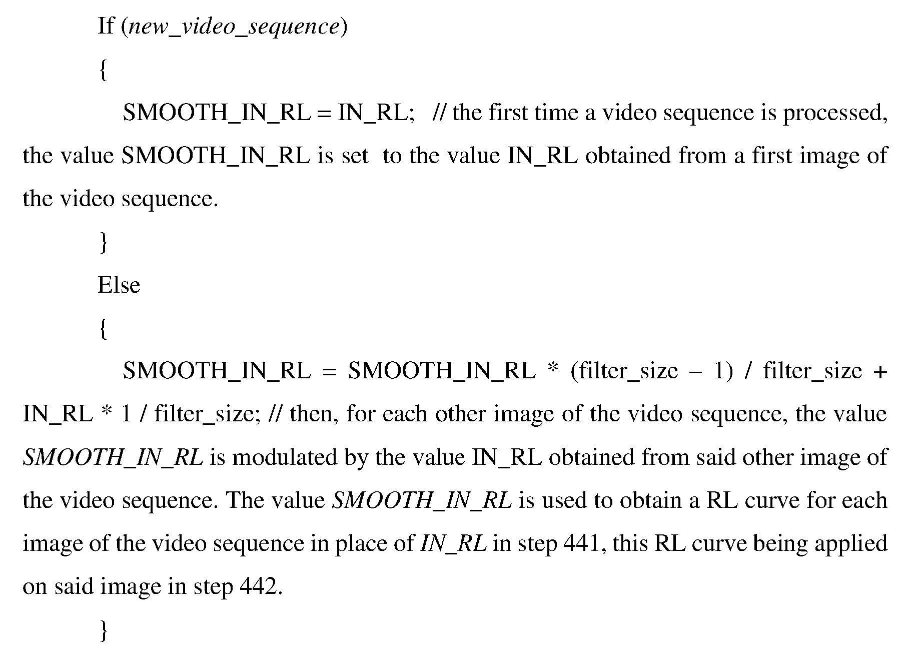

In a second embodiment of step 4104, the processor 310 applies the temporal smoothing of the first embodiment but without resetting the value *SMOOTH_IN_RL* at the value *IN_RL* obtained from a first image of the video sequence.

When step 4104 is applied, at the end of the process of FIG. 6A, the reference level value *SMOOTH_IN_RL* replaces the reference value *IN_RL.* In other words, in the reminder of the process of FIG. 4, the reference level value *SMOOTH_IN_RL* is used in place of the reference value *IN_RL.*

**FIG. 5** illustrates a process of modifying a video sequence.

The process of FIG. 5 is for instance implemented by the processor 310 of the live production system 22. The process of FIG. 5 is applied during step 44 successively to each video sequence that needs to be modified.

In a step 441, the processor 310 determines for a current video sequence a RL curve based on the second reference level value. Step 441 is detailed in relation to FIG. 6B.

In a step 442, the processor 310 applies the RL curve to the current video sequence to obtain a modified video sequence.

**FIG. 6B** illustrates a process of determining a reference level curve.

The process of FIG. 6B corresponds to step 441 in Fig. 5 and is therefore executed by the processor 310 of the live production module. As the process of Fig. 5, the process of Fig. 6B is applied for a current video sequence.

In a step 44101, the processor 310 obtains the second reference level value *OUT_RL.*

In a step 44102, the processor 310 computes or obtains values used during the process. These values comprise:
- a converted first reference level value *In_RL* corresponding to the first reference value *IN_RL* computed in step 41 applying the process of FIG. 6A. The converted first reference level value *In_RL* results from a conversion in the video transfer function domain and a sampling to the bit depth of the video ("1024" samples for a "10" bits video) of the first reference level value *IN_RL* (In_RL=inv_EOTF(IN_RL)).
- A converted second reference level value *Out_RL* corresponding to the second reference level value *OUT_RL* (in cd/m2). The converted second reference level value *Out_RL* results from a conversion in the video transfer function domain and a sampling to the bit depth of the video ("1024" samples for a "10" bits video) of the second reference level value *OUT_RL* (Out_RL=inv_EOTF(OUT_RL)).

**Table Tab 1**

| Transfer domain | Out_RL equation | reference |
|---|---|---|
| HDR PQ | Inv_EOTF_{PQ}(OUT_RL) | See section 5.2 of document SMPTE ST 2084:2014: "High Dynamic Range Electro-Optical Transfer Function of Mastering Reference Displays*"* |
| HDR HLG | Inv_EOTF_{HLG} = OETF_{HLG}(inv_OOTF_{HLG} (OUT_RL)) | See Table 5 of document Recommendation ITU-R BT.2100-2, Image parameter values for high dynamic range television for use in production and international programme exchange, 07/2018 |
| SDR BT.1886 | Inv_EOTF_{BT.1886}(OUT_RL)=power(OUT_RL,1/ 2,4) | See document Recommendation ITU-R BT.1886 (03-2011): "Reference electro-optical transfer function for flat panel displays used in HDTV studio production*"* |
| SDR BT.709 | Inv_EOTF_{BT.709}(OUT_RL) | Section 1 of document Recommendation ITU-R BT.709-6, Parameter values for the HDTV standards for production and international programme exchange, 06/2015*.* |

Table TAB1 provide reference documents providing details on the Inv_EOTF() operation;
- a value *RL_ratio* = Out_RL / In_RL.
- A value *In_CP* defining an index of a convergence point in the *After_RL_case* case between the modified RL curve and the No-correction curve. As an example, the value *In_CP* is computed as follows but other values may be chosen for *In_CP:*
   *In_CP =* MIN(2 ** In_RL,* 1023)

In a step 44103, the processor 310 determines if the *Before_RL_case* case can be managed by a function based on a gamma curve, i.e., the processor 310 determines if the part of the curve between the origin (corresponding to point (0,0)) and the RL point (In_RL, Out_RL) can be determined using a function based on a gamma curve.

In an embodiment, the *Before_RL_case* case is expected to be managed by the following mathematical operation:
For each index below or equal to *In_RL:* $Y _ lut \left[i\right] = i * \left(1+power\left(i/1024,invGammaRescale\right)-i/1024\right)$ $with invGammaRescale = log \left(RL_ratio+In_RL/1024-1\right) / log \left(In_RL/1024\right)$ and with *Y_lut[i]* representing the RL curve and G(i)= power(*i* / 1024, $\left.invGammaRescale\right) = {\left(\frac{i}{1024}\right)}^{invGammaRescale}$ is a gamma curve.

This mathematical operation applied to the No-correction curve has the advantage of moving away from the No-correction curve in a progressive manner. However, other mathematical operation could be used for that purpose.

This mathematical operation works very well in almost all reference levels settings cases except when the reference level point is extreme, i.e. very far away from the No-correction curve. This condition does not correspond to valid conditions expected in a real production world. However, the implementation must ensure that, even if an operator decides to set unrealistic reference levels conditions, in a conscious manner or erroneously, the system must not crash. Therefore, the validity of the mathematical operation must be checked before computing it. In one embodiment, the mathematical operation is valid if: $log \left(RL_ratio+In_RL/1024-1\right) is defined , i . e . , if \left(\begin{matrix}RL _ ratio + In _ RL / 1024 \\ - 1\end{matrix}\right) > 0$

If (*RL_ratio + In_RL* / 1024 - 1) > 0, then a variable *Ratio_OK =* true and the processor 310 continues with a step 44104.

If (RL_ratio + In_RL / 1024 - 1) ≤ 0, then the variable *Ratio_OK =* false and the processor continues with a step 44110.

In step 44104, the processor 310 computes the RL curve applying equations (eq. 1) and (eq. 2) up to the abscissa *In_RL,* i.e., the processor 310 computes the RL curve *Y_lut[i]* for *i* in [0; *In_RL*] by modifying the No-correction curve applying equation (eq. 1). The process of step 44104 applies in the *Above_case* and the *Below_case* cases.

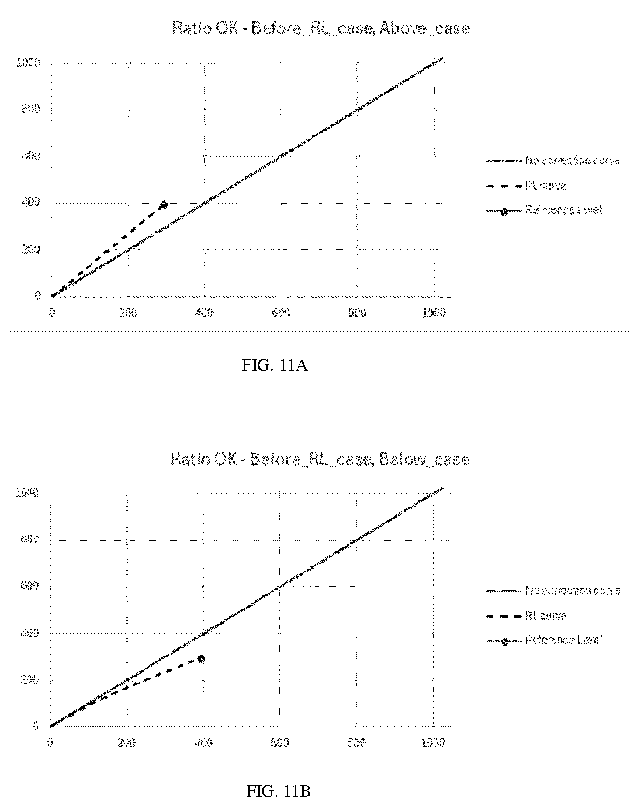

**FIGS. 11A** and **11B** illustrate examples of curves obtained applying step 44104 in the *Before_ RL_case* case and the *Above_case* (FIG. 11A) or the *Below_case* (FIG. 11B).

In a step 44105, the processor 310 determines if the reference level point is above (*Above_case*) or below (*Below_case*) the No-correction curve to deal with the *After_RL_case* case. Indeed, the *After_RL_case* case needs to be managed differently, with different mathematical operations, depending on the position of the reference levels.

This determination is based on the value *invGammaRescale:*

```
    If (invGammaRescale < 1)
           The Above_case case is detected. Step 44105 is followed by a step
    44106.
    Else (invGammaRescale >= 1)
           The Below_case case is detected. Step 44105 is followed by a step
    44107.
```

In step 44106, the processor 310 computes the RL curve in the *Above_case* between the abscissa *In_RL* and the value *In_CP* , i.e., the processor 310 computes the RL curve in the *After_RL_case* case for values of abscissa greater than *In_RL.* The following operation is applied:
For each index *i* above *In_RL* and up to *In_CP:* $Y _ lut \left[i\right] = i \times \left(1+\left(RL_ratio-1\right)\times power\left(\left(In_CP-i\right)/\left(In_CP-In_RL\right),3\right)\right)$

Where power (a,b)=*a^{b}*.

The mathematical operation of equation (eq. 4) applied to the No-correction curve has the advantage of generating a RL curve approaching progressively the No-correction curve, i.e., of generating a RL curve starting at the reference level point (In_RL, Out_RL) and joining progressively the No-correction curve at least at the value *MaxAbs.* However, other mathematical operations could be used for the same purpose.

In some extreme cases, this mathematical operation may generate a RL curve with a non-monotonic increasing part.

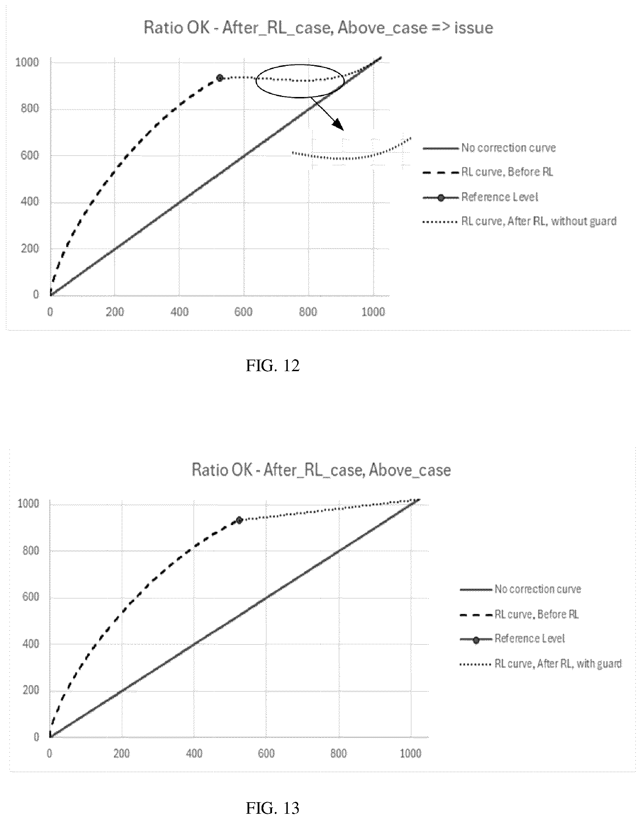

**FIG. 12** illustrates a RL curve with a non-monotonic increasing part.

Such RL curve with a non-monotonic increasing part is problematic since a RL curve must absolutely be bijective. To prevent such issue a protection process is applied. This protection process consists in computing a straight line, that is a monotonic increasing line, for each index *i,* between the preceding point *Y_lut[i-1]* and the last point of the RL curve, and to assign the value of the straight line for the current index *i* applying equation (eq. 5): $Y _ lut \left[i\right] = Y _ lut \left[i-1\right] + \left(In_CP-Y_lut\left[i-1\right]\right) / \left(In_CP-\left(i-1\right)\right)$

Finally, in step 44106, for each index *i*, the processor 40 keeps the maximum value between the result of equation (eq. 4) and the result of equation (eq. 5):
*Y_lut[i]* = MAX (
*i* × (1 + (*RL_ratio -* 1) × power( (*In_CP -* i) / (*In_CP - In_RL*), 3) ) , $Y _ lut \left[i-1\right] + \left(In_CP-Y_lut\left[i-1\right]\right) / \left.\left(In_CP-\left(i-1\right)\right)\right)$

**FIG. 13** illustrates a monotonic increasing RL curve obtained applying equation (eq. 6).

Step 44106 is followed by a step 44108 that is detailed hereafter.

In step 44107, the processor 310 computes the RL curve in the *Below_case* case between the abscissa *In_RL* and the value *In_CP,* i.e., the processing module 40 computes the RL curve in the *after_RL_case* case.

For each index *i* above *In_RL* and up to *In_CP:* $Y _ lut \left[i\right] = i \times \left(1+\left(RL_ratio-1\right)\times power\left(\left(In_CP-i\right)/\left(In_CP-In_RL\right),3\right)\right)$

Finally, in step 44107, for each index *i*, the processor 310 keeps the minimum value between the result of equation (eq. 7) and the No-correction curve, resulting in the following equation (eq. 8): Y_lut[i] = MIN(i , i × (1 + (RL_ratio - 1) × power( (In_CP - i) / (In_CP - In_RL), 3) )

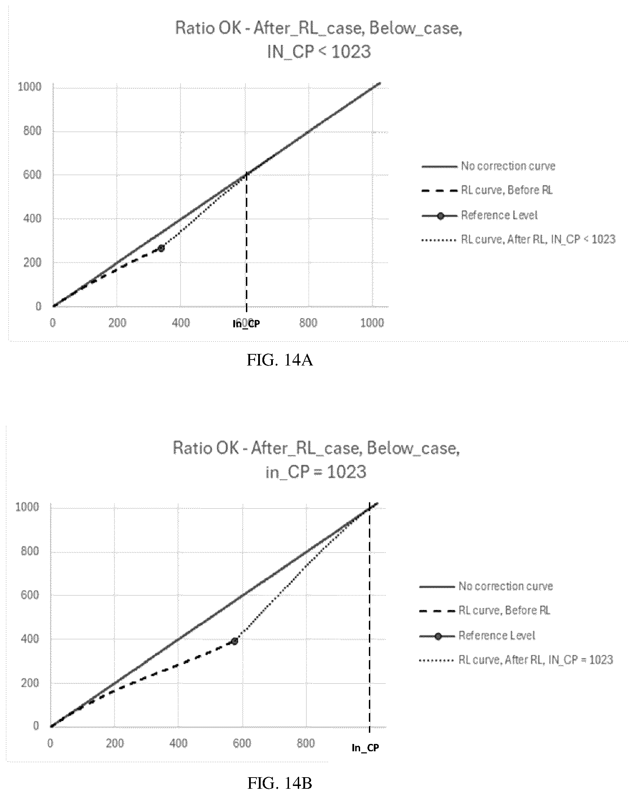

**FIGS. 14A and 14B** illustrate a monotonic increasing RL curve obtained applying step 44107. In FIG. 14A, *In_CP < MaxAbs.* In FIG. 14B, *In_CP = MaxAbs.*

Step 44107 is followed by a step 44108 during which the processor 310 determines whether *In_CP* is lower than *MaxAbs* or not.

If In_CP=MaxAbs, the processor 310 stops the process of Fig. 6B in a step 44112. Indeed in that case, all the RL curve has been generated.

Otherwise, Step 44108 is followed by a step 44109.

During step 44109, the processor 310 computes the RL curve from the abscissa *In_CP* to the MaxAbs. In that case, the computation of the reference level-based TM curve between *In_CP* and *MaxAbs* is simply a copy of the No-correction curve:
For each index *i* above *In_CP* and up to *MaxAbs:*
Y_lut[i] = i

This produces the part of the RL curve after In_CP shown in the right part of Fig. 14A.

Step 44109 is followed by step 44112.

When the variable *Ratio_OK* is false, i.e. the reference level conditions are unrealistic and extreme, step 44103 is followed by steps 44110 and 44111.

As the reference level conditions are unrealistic and extrema, a goal of steps 44110 and 44111 is to build a simple RL curve based on simple mathematical functions that can never make a system crash due to impossible computations. This case only happens when (*RL_ratio + In_RL* / 1024 - 1) ≤ 0 (see equation (eq. 3)) is verified (see step 44103), therefore this can only happen in the *Below_case* case.

The idea is to use some simple modulation techniques that are different in the *Before_RL_case* case and in the *After_RL_case* case.

To do so, an example of algorithm is proposed in steps 44110 and 44111.

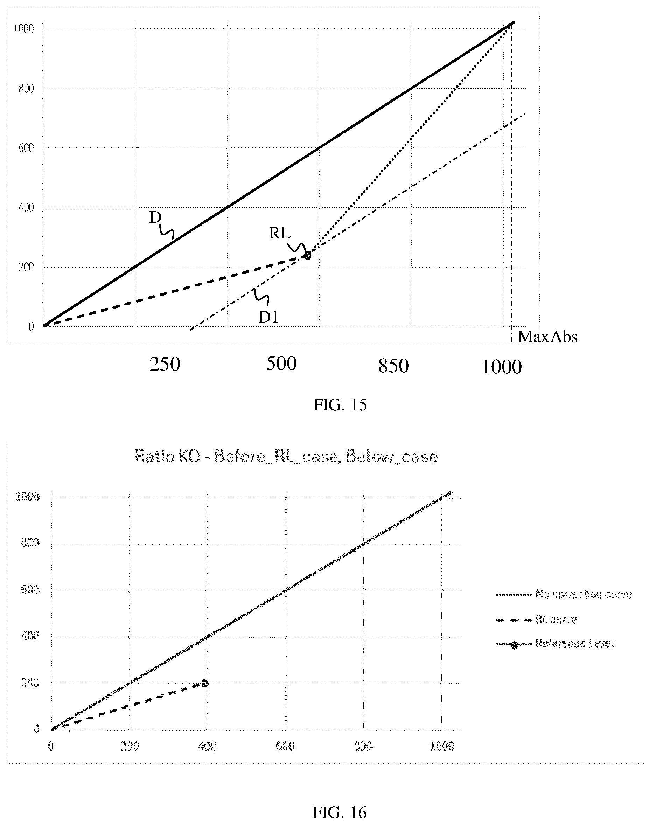

**FIG. 15** illustrates the algorithm applied for defining a RL curve in case of unrealistic or extreme reference levels of steps 44110 and 44111.

This algorithm comprises defining a straight-line D passing through the point (0,0) and the point (MaxAbs, MaxOrd) with *MaxOrd* representing a maximum ordinate value, and translating the straight-line D to obtain a second straight-line D1 parallel to the straight line D and that passes through the reference level point (RL (In_RL, Out_RL)).

Between the point (0,0) and the reference level, the RL curve is a weighted average between the No-correction curve and the straight line D1 such that the weight applied to the No-correction curve is inversely proportional to the index of the abscissa and the weight applied to the segment D1 is proportional to the index of the abscissa. Between the reference level point and the point (MaxAbs, MaxOrd), the RL curve is a weighted average between the No-correction curve and the straight line D1 such that the weight applied to the No-correction curve is proportional to the index of the abscissa and the weight applied to the straight line D1 is inversely proportional to the index of the abscissa.

In the step 44110, the processor 310 generates the part of the RL curve corresponding to the *Before_case* case.

For the *Before_case* case, a modulation is as follow:
For each index *i* in [0*, In_RL*]*,* define two modulations:
- Modulation 1: modulate the No-correction curve, i.e. apply a mathematical function *modulation1[i]*:
   *i* × *modulation1[i]*
   with *modulation1[i]* being a "straight line" with the following conditions:
      *o modulation1[0] =* 1;
      *o modulation1[In_RL] = 0.*
      This defines a straight line function (*y* = *a_p1_y* × *x + b_p1_y*) with *a_p1_y* = - 1 / *In_RL* and *b_p1_y* = 1.
- Modulation 2: modulate a straight line (D2[i]) that is built with a straight line (D1) between the origin (0, 0) and the extrema (MaxAbs, MaxOrd) of the No-correction curve, and translated to the reference level point. (D1) is defined by (*y = a_tan_rl* × *x*) with *a_tan_rl = MaxOrd* / *MaxAbs.* (D2) is the translated line from (D1) with equation (D2) = (*y* = *a_tan_rl* × *x + b_tan_rl*) and with:
   *D2[In_RL] = Out_RL,* therefore giving:
   *b_tan_rl = Out_RL- MaxOrd* × *In_RL* / *MaxAbs* (*D2[i]*) is then modulated by the function *modulation2[i]:*
   *D2[i] * modulation2[i]* with *modulation2[i]* being a "straight line" with the following conditions:
   *o modulation2[0] =* 0;
   *o modulation2[In_RL] = 1.*
This defines a "straight line" function (*y = a_p1_tan* × *x + b_p1_tan*) with *a_p1_tan =* 1 / *In_RL* and *b_p1_tan =* 0.

To ensure that this operation does not produce a curve that can be above the No-correction curve, a protection process is applied consisting in taking the minimum value between the results of the 2 modulations and the No-correction curve.

The resulting RL curve is therefore defined as follows:
For each index *i* in [0*, In_RL*], Y_lut[i] = MIN(i, i × ( a_p1_y × i + b_p1_y ) + ( a_tan_rl × i + b_tan_rl) × ( a_p1_tan × i + b_p1_tan ) )

**FIG**. **16** illustrates a part of monotonic increasing RL curve obtained applying step 44110.

In step 44111, the processor 310 generates the part of the RL curve corresponding to the *After_RL_case* case.

For the *After_RL_case* case, the modulation is as follow:
For each index *i* in [*In_RL, In_CP*]*,* define two modulations:
∘ Modulation 3: modulate the No-correction curve, i.e. apply a mathematical function *modulation3[i]:*
   *i* × *modulation3[i]* with modulation3[i] being a "straight line" with the following conditions:
   modulation3[In_RL] = 0;
   modulation3[In_CP] = 1. This defines a straight line function (*y* = *a_p2_y* × *x + b_p2_y*) with *a_p2_y =* 1 / (*In_CP - In_RL*) and *b_p2_y = In_RL* / (*In_RL - In_CP).*
∘ Modulation 4: modulate the already computed straight line (D2[i]) (*y = a_tan_rl* × *x + b_tan_rl*) (see *before_RL_case* case) with the *modulation4[i]* function:
   *D2[i]* × *modulation4[i]* with *modulation4[i]* being a "straight line" with the following conditions:
   *modulation4[In_RL] =* 1;
   *modulation4[In_CP] = 0.* This defines a straight line function (*y = a_p2_tan* × *x + b_p2_tan*) with *a_p2_tan =* 1 / (*In_RL - In_CP*) and *b_p2_tan = In_CP* / (*In_CP - In_RL*).

To ensure that this operation does not produce a curve that can be above the No correction curve, a protection process is applied consisting in taking the minimum value between the results of the "2" modulations and the No-correction curve.

The resulting RL curve is therefore defined as follows:
For each index *i* in [*In_RL, In_CP*]*,* Y_lut[i] = MIN(i, i × ( a_p2_y × i + b_p2_y ) + ( a_tan_rl × i + b_tan_rl ) × ( a_p2_tan × i + b_p2_tan ) )

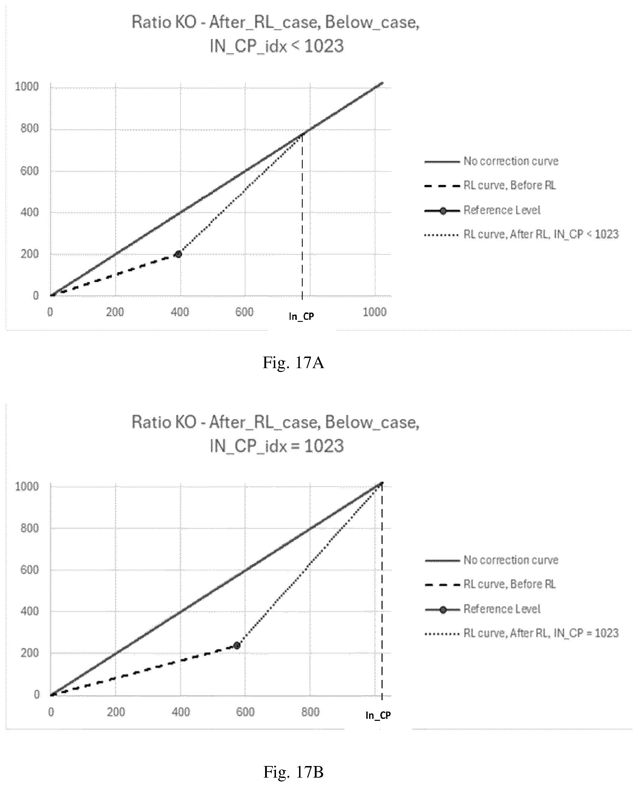

**FIGS. 17A** and **17B** illustrate two examples of a part of monotonic increasing RL curve obtained applying step 44111. In FIG. 17A, *In_CP < MaxAbs.* In FIG. 17B, *In_CP = MaxAbs.*

Step 44111 is followed by step 44108 already explained.

FIG. 6A illustrates a first example of process for estimating a first reference level of a video sequence. In an embodiment of this process, the first reference level value IN_RL is the bin number of the histogram (or Y filtered histogram) which has the highest value.

Even if this method is effective, some cases can happen where the bin with the highest value doesn't correspond to the reference level. This bin can be isolated, i.e. its neighboring bins have a much lower value than its own value, while the reference level is represented in another part of the histogram by a set of close bins. These close bins may be labelled from bin *b* to bin *b + n,* all of these bins having a value lower than this highest bin, but the sum of the values of all these close bins being much higher than this highest value. This set of close bins is called a *lobe,* and the width of a lobe is *n + 1*.

Several lobes can exist in the histogram. A lobe can have a width equal to "1"( in this case the lobe is an isolated bin).

Lobes can be thought as a number of aggregated bins neighboring a bin *p* with a higher value. The width of the lobes is limited to *2*W* + *1* which means that we can have a maximum of *W* aggregated bins on the left of bin *p* and a maximum of *W* aggregated bins on the right of bin *p*. For a "256" bins histogram, *W* can be equal to "20", but another value can be used.

An algorithm to identify the lobes may be the following:
1. Identify in the range [*histoY_min, histoY_max*] of an histogram of luminance values *histoY[]* bins *p* corresponding to peaks, i.e. such that *histoY[p] > histoY[p-1]* and *histoY[p] > histoY[p+1]*
2. For the identified peaks *p,* starting from bin *b* = *p -* 1 down to *p - w*, bin *b* is declared to belong to a lobe if:
   a. *histoY[b] < histoY[p]*
   b. *histoY[b] > histoY[p]* × *lobeBoundary,* with *lobeBoundary* being equal to "0.2" for example. That means that a lobe is something prominent.
   c. when *b < p - 1, histoY[b] < histoY[b + 1]* × *lobeNoiseAcceptance, lobeNoiseAcceptance* being equal to "1.025" for example. That means that we can have some noise on a descending left side of the lobe. In other words, the left side of the lobe is globally descending with some small allowed ascending parts.
3. For all the identified peaks *p,* starting from bin *b = p* + 1 down to *p* + *w*, *b* is declared to belong to the lobe if
   *a. histoY[b] < histoY[p],*
   *b. histoY[b] > histoY[p]* × *lobeBoundary,*
   c. when b > p + 1*, histoY[b] < histoY[b - 1]* × *lobeNoiseAcceptance*

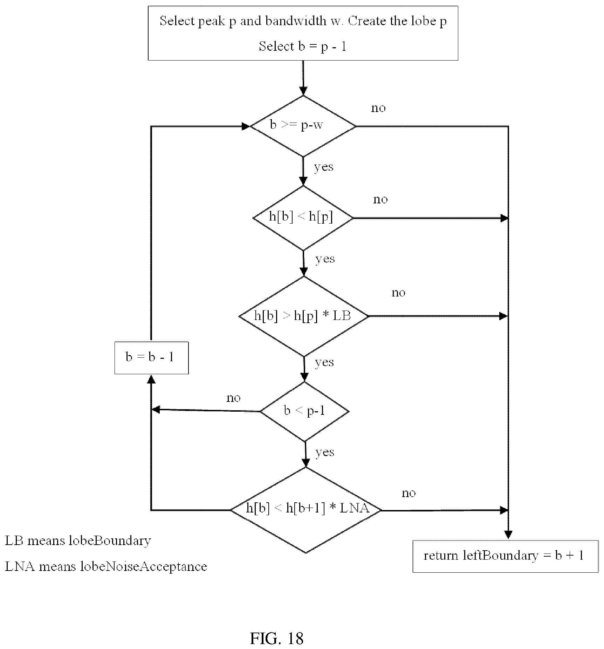

This is summarized in **FIG. 18** for the left case (steps 1 and 2). The peak *p,* which can also be called center of the lobe, is in the range [*histoY_min, histoY_max*]*.* The returned value is the lowest bin included in the lobe. The histogram of luminance values is named h.

The algorithm for the right part (step 3) of the lobe can be easily deduced from the diagram above.

It can be understood from this diagram that the peak (or the center) of a lobe is inside the range [*histoY_min,* histoY_max], but that the left part or the right part of a lobe can be outside this range. It can also be understood that a lobe can be made of one bin only.

It is worth noting that the center of a given lobe could be repositioned where the lobe is heavier, i.e. at its barycentre: $lobe center = \sum \left(h\left(b\right)*b\right) / \sum h \left(b\right)$ with *b* in the range [*leftBoundary, rightBoundary*]
*lefBoundary* and *rightBoundary* being the bin numbers defining the boundaries of the lobe.

At the end, if only one lobe is detected, which is quite unlikely due to the definition of the lobes which can be as narrow as one bin, the first reference level is the center of the lobe.

When several lobes are detected, each lobe is characterized by its weight. The weight of the lobe is the sum of the values of the bins included in the lobe. Then, the first reference level depends on the weight of all the lobes, or on the weight of the heaviest lobes. Several methods may be used. In methods exposed hereafter, the first reference level is related to the number of bins of the histogram. If the number of bins of the histogram is a submultiple of the number of possible values of Y, the found first reference level is multiplied by "number of Y values in the histogram / number of bins in the histogram".

In a first embodiment of a method of identifying a first reference level in lobes, the first reference level is the center of the lobe with the highest weight.

It happens quite often that the largest area in a scene, for example the green grass for football match, is itself split in two or more areas. For example, one part of the field can be exposed to sunshine while the other part is in the shade. Both parts can be of equal or near equal size. In this case, two lobes are detected which have quite close weight.

To deal with this case, in a second embodiment of a method of identifying a first reference level in lobes, instead of choosing the heaviest lobe (i.e. the lobe with the highest weight), the first reference level can be positioned between the centers of the two lobes depending on their weight. If the lobe in the shade has a higher weight than the lobe exposed to sunshine, then the first reference level is chosen closer to the center of the lobe in the shade. $IN _ RL = \left(Lc\left[1\right]\times W\left[1\right]+Lc\left[2\right]\times W\left[2\right]\right) / \left(W\left[1\right]+W\left[2\right]\right)$ with *i* being the lobe numbers (equal to "1" or "2"), *Lc[i]* is the center of the lobe *i* and *W[i]* is the weight of the lobe *i*

More generally, if *N* lobes have been detected, the first reference level can be calculated as follows: $IN _ RL = \sum \left(Lc\left[i\right]*W\left[i\right]\right) / \sum W \left[i\right]$ where *i* is a lobe number, *Lc[i]* is the center of the lobe *i* and *W[i]* is the weight of the lobe *i.*

Lobes with a too low weight can also be eliminated in the calculation of the first reference level. In a variant, the first reference level is determined only from the two lobes with the heaviest weight.

In a third embodiment of a method of identifying a first reference level in lobes, a temporal filtering could be applied as in step 4104 after the execution of the first or second embodiment of a method of identifying a first reference level in lobes.

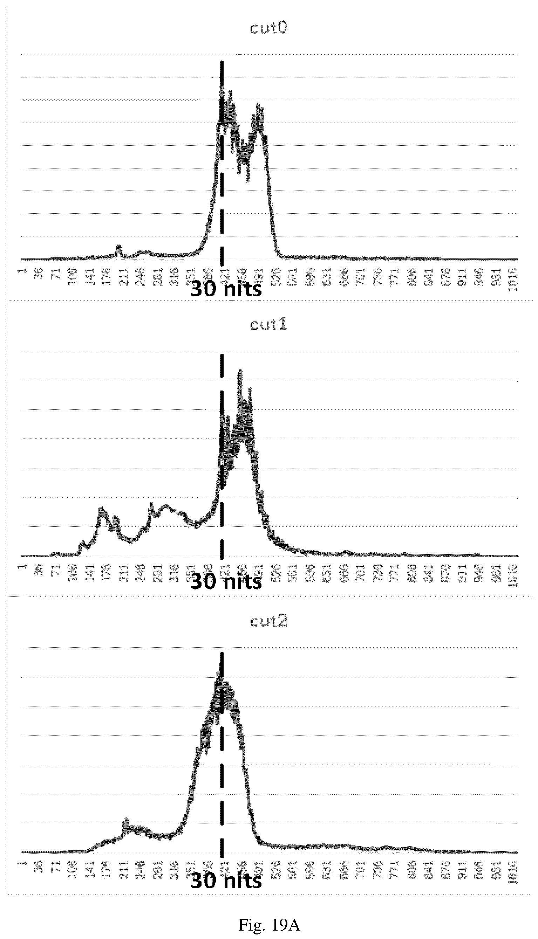

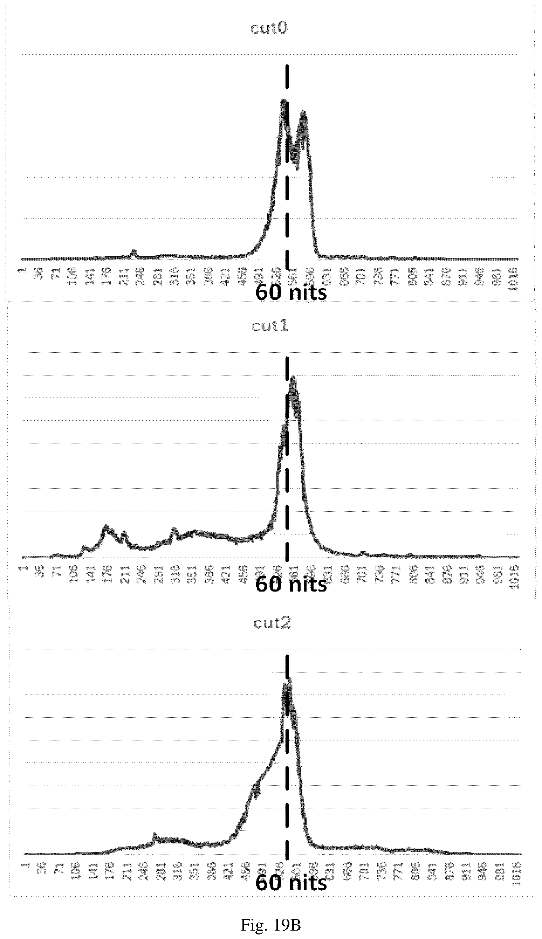

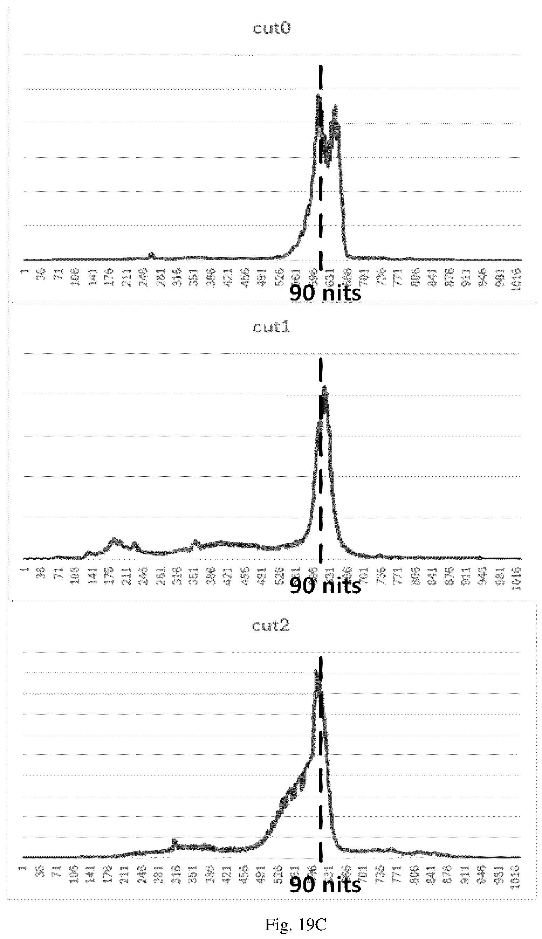

**FIG. 19A****,** **19B** **and** **19C** illustrate applications of the process of FIG. 4 to the 3 video sequences described in relation to FIG. 1.

In FIG 19A the second reference level is set to 30 nits.

In FIG 19B the second reference level is set to 60 nits.

In FIG 19C the second reference level is set to 90 nits.

As can be observed in FIGS. 19A, 19B and 19C, the peaks of all the histograms are now consistent with the second reference level value OUT_RL, leading to visually consistent luminance level of the grass.

Until now, the embodiments described use only one second reference level *OUT_RL.* The method of FIG. 4 may be extended to multiple second reference levels. The construction of the RL curve may be an iterative execution of step 441 (i.e., of the process described in FIG. 6B) for each second reference level of the multiple second reference levels. At each iteration, step 441 is applied with a new reference level, but, except at the first iteration wherein the No-correction curve is used, at the other iterations, the No-correction curve is replaced by the RL curve determined at the previous iteration.

In addition, the process of FIG. 6B use interpolations to construct the RL curve. In a variant, the construction of the RL curve in case of a plurality of reference levels may use other interpolation techniques such as polynomial interpolations, splines, hermits, ...

Moreover, until now, the first part of the RL curve, called *Before_RL_case* case, starts at the origin (0,0). The start point may be modified so that it is closer to the reference level abscissa *In_RL.* This variant amounts at having a divergence point between the origin (0,0) and the abscissa *In_RL* where the RL curve starts diverging from the no-correction curve. This variant is particularly interesting when the abscissa *In_RL* is far from the origin (0, 0).

In addition, until now, it was considered that the at least two video sequences obtained in step 40 are intended to the displayed successively. In another embodiment, these at least two video sequences are intended to be displayed simultaneously. Indeed, the problem of homogenization of the reference levels is the same when the video sequences are displayed simultaneously. For instance the at least two video sequences are intended to be displayed side by side or in the form of at least one video sequence embedded in another video sequence.

In addition, until now, in step 41, the process of determining a reference level value of a video sequence of FIG. 6A is applied. The process of FIG. 6A consists in identifying automatically the largest homogeneous area represented by a video sequence in histogram of luminance representative of this video sequence. Alternatively, the area of interest could be indicated by the operator. In the case, the first reference level is the reference level of the area of interest indicated by the operator.

In addition, until now we have considered that the at least two video sequences represent different viewpoints of a same scene. In another embodiment, the at least two video sequences may represent a same area of interest. However, the at least two video sequences may not represent different viewpoints of the same scene. The idea here is to homogenize the luminance levels of the same area of interest in the at least two video sequences.

One or more embodiments provide a computer program comprising instructions which when executed by one or more processors cause such processors to perform the methods according to any of the embodiments described above. One or more embodiments also provide a computer readable storage medium having stored thereon instructions for implementing the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the method for modifying video sequences based on a second reference level described above may be implemented as one or more modules and modified according to the various embodiments of the present disclosure.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

We described above a number of embodiments. Features of these embodiments can be provided alone or in any combination. Further, embodiments can include one or more of the following features, devices, or aspects, alone or in any combination, across various claim categories and types:
- A TV, set-top box, cell phone, tablet, personal computer or other electronic device that performs at least one of the embodiments described, and that displays (e.g. using a monitor, screen, or other type of display) a resulting picture.
- A TV, set-top box, cell phone, tablet, personal computer or other electronic device that tunes (e.g. using a tuner) a channel to receive a signal including a reconstructed video content, and performs at least one of the embodiments described.
- A TV, set-top box, cell phone, tablet, or other electronic device that receives (e.g. using an antenna) a signal over the air that includes a reconstructed video content, and performs at least one of the embodiments described.

## Claims

1. A method comprising:
obtaining (40) at least two video sequences;
determining (41) a first reference level value for each video sequence, each first reference level value being representative of a luminance level of a same area of interest in each video sequence;
obtaining (43) a second reference level value; and,
modifying (44) at least one of the video sequences so that, for each modified video sequence, the luminance level of the same area of interest in the video sequence is equal to the second reference level value using (442) a conversion curve depending on the first reference level value of the video sequence and on the second reference level value.

2. The method of claim 1 wherein determining (41) a first reference level value for each video sequence comprises for a video sequence:
computing a first histogram representative of a luminance component of the video sequence; and,
determining the first reference level value of the video sequence from a second histogram representative of the first histogram based on a bin value corresponding to a most represented luminance value in the video sequence.

3. The method of claim 2 wherein the second histogram is a filtered (4102) version of the first histogram wherein, for each current bin of the second histogram, an histogram value corresponding to the current bin is a weighted average of a plurality of histogram values of the first histogram corresponding to the current bin and to bins in a neighborhood of the current bin.

4. The method of claim 2 or 3 wherein determining (41) a first reference level value for each video sequence comprises for a video sequence applying (4104) a temporal smoothing to a plurality of reference levels obtained from the second histogram.

5. The method of any previous claim comprising, responsive to (44103) a first value is greater than zero, the first value depending on the first reference level value and on a ratio between the second reference level value and the first reference level value, obtaining (442) a conversion curve passing through a reference level point up to the first reference level value using a curve based on a gamma curve, the reference level point having an abscissa equal to the first reference level value and an ordinate equal to the second reference level value.

6. The method of claim 5 comprising, responsive to (44105) the reference level point is above a no-correction curve, the no-correction curve being such that an application of the no-correction curve to a video sequence doesn't modify said video sequence, obtaining (44106) a conversion curve passing through the reference level point for values greater than the first reference level value using a mathematical operation generating a second tone mapping curve starting at the reference level point and joining progressively the no-correction curve at a convergence value, the convergence value specifying an abscissa between the first reference level value and a maximum abscissa value.

7. The method of claim 5 comprising, responsive to (44105) the reference level point is below a no-correction curve, the no-correction curve being such that an application of the no-correction curve to a video sequence doesn't modify said video sequence, obtaining (44107) a conversion curve passing through the reference level point for values greater than the first reference level value based on the first reference level value and on a convergence value, the convergence value specifying an abscissa at which the conversion curve joins the no-correction curve between the first reference level value and a maximum abscissa value.

8. The method of claim 7 wherein, responsive to the convergence value is lower than the maximum abscissa value, the method comprises defining (44109) the conversion curve as a copy of the no-correction curve between the convergence value and the maximum abscissa value.

9. A device comprising electronic circuitry configured for:
obtaining (40) at least two video sequences;
determining (41) a first reference level value for each video sequence, each first reference level value being representative of a luminance level of a same area of interest in each video sequence;
obtaining (43) a second reference level value; and,
modifying (44) at least one of the video sequences so that, for each modified video sequence, the luminance level of the same area of interest in the video sequence is equal to the second reference level value using (442) a conversion curve depending on the first reference level value of the video sequence and on the second reference level value.

10. The device of claim 9 wherein determining (41) a first reference level value for each video sequence comprises for a video sequence:
computing a first histogram representative of a luminance component of the video sequence; and,
determining the first reference level value of the video sequence from a second histogram representative of the first histogram based on a bin value corresponding to a most represented luminance value in the video sequence.

11. The device of claim 10 wherein the second histogram is a filtered (4102) version of the first histogram wherein, for each current bin of the second histogram, an histogram value corresponding to the current bin is a weighted average of a plurality of histogram values of the first histogram corresponding to the current bin and to bins in a neighborhood of the current bin.

12. The device of claim 10 or 11 wherein determining (41) a first reference level value for each video sequence comprises for a video sequence applying (4104) a temporal smoothing to a plurality of reference levels obtained from the second histogram.

13. The device of any previous claim from claim 9 to 12 wherein, responsive to (44103) a first value is greater than zero, the first value depending on the first reference level value and on a ratio between the second reference level value and the first reference level value, the electronic circuitry is further configured for obtaining (442) a conversion curve passing through a reference level point up to the first reference level value using a curve based on a gamma curve, the reference level point having an abscissa equal to the first reference level value and an ordinate equal to the second reference level value.

14. The device of claim 13 wherein, responsive to (44105) the reference level point is above a no-correction curve, the no-correction curve being such that an application of the no-correction curve to a video sequence doesn't modify said video sequence, the electronic circuitry is further configured for obtaining (44106) a conversion curve passing through the reference level point for values greater than the first reference level value using a mathematical operation generating a second tone mapping curve starting at the reference level point and joining progressively the no-correction curve at a convergence value, the convergence value specifying an abscissa between the first reference level value and a maximum abscissa value.

15. The device of claim 13 wherein, responsive to (44105) the reference level point is below a no-correction curve, the no-correction curve being such that an application of the no-correction curve to a video sequence doesn't modify said video sequence, the electronic circuitry is further configured for obtaining (44107) a conversion curve passing through the reference level point for values greater than the first reference level value based on the first reference level value and on a convergence value, the convergence value specifying an abscissa at which the conversion curve joins the no-correction curve between the first reference level value and a maximum abscissa value.
